# EUROPEAN PATENT SPECIFICATION

(11) **EP 1 642 858 B1**
(45) Date of publication and mention of the grant of the patent: **02.11.2011**
(21) Application number: 05012888.3
(22) Date of filing: 15.06.2005
(51) Int. Cl.: B66B 11/04, H02K 21/22

(54) **Elevator tractor**
Aufzugsschlepper
Entraînement d'ascenseur

(30) Priority: 10.09.2004 CN 200410066305
(43) Date of publication of application: 05.04.2006
(73) Proprietor: NingBo XinDa Elevator Fittings Factory, DongWu Town NingBo City, ZheJiang Province (CN)
(72) Inventor: Pan, ShiZheng, ZheJiang Province (CN)
(74) Representative: Müller-Boré & Partner Patentanwälte

(56) References cited:
- EP-A- 1 074 505
- EP-A2- 1 043 261
- FR-A- 2 505 574
- US-A- 4 960 186

## Description

### Field of the Invention

This invention relates to the technology field of elevator tractor.

### Description of the Related Art

With the construction and development of cities, more and more skyscrapers are rising one after another which needs more and more elevators. However, modem people appeal for better elevators, smaller in size and lighter in weight of the elevator tractors to reduce the space of the machine room or without machine room.

Therefore, many technical personnel are developing elevator tractors of new structure, such as the China Patent No. 01113256.6 <Direct Drive Neodymium-iron-boron Permanent Magnetic Outer-rotor Synchronized Tractor> which features multipolar outer rotors and two-layer circline stator structure. The internal surface of the outer rotor equipped with salient pole magnetic steel and the magnetic yoke of the outer rotor can generate magnetic circuit as the support of the salient magnetic steel as well as the fixed support of the traction sheave. The internal stator consists of stator inner ring, stator core, armature winding and stator outer ring. The traction sheave is fixed on the rotor while the stator and rotor are supported by bearings. Fabricated structure is adopted for the connection of the stator inner ring and outer ring. The brake arm is fixed on the outer ring and there is the brake strips between the brake arm and the outer rotor which plays the role of brake sheave. The electromagnet, compression spring and the screw are fixed at the upper part of the stator outer ring while the brake arm at the moveable supporting points at the both sides of the lower part of the stator outer ring. The compression spring is connected to the brake arm while the electric motor's small shaft is equipped with photoelectric encoder. The unique design of the mechanical and electrical integration of tractor, brake arm and electric motor's outer rotor brings about a more compact structure and realizes the direct drive without gear wheels. The special two-layer circline stator structure improves not only the operational reliability but also the manufacturability at the same time. It is the most desirable new elevator traction drive equipment with the advantages of stable lifting and accurate positioning as well as high reliability of braking with the adoption of two sets of braking parts.

There is no doubt that it has the progressive aspects as described, but it is still not so perfect. For example, the irrational complicate design of the supporting structure renders the difficult manufacture of the supporting frame, especially the shaft hole. It is the same case with tractors of other structures. For some tractors, their two bearings are welded together. To ensure that the two bearing holes are concentric, it is necessary to manufacture the two integrated bearing holes which are far from each other. Furthermore, one end should be manufactured into a bigger one for the sake of installation and then manufacture another flange bearing cover which results in more difficult production, more complicate structure and much higher cost. Secondly, because of its fixed supporting frame, its limited commonality makes it difficult to form serial design which greatly confines its generalization and application. In addition, the traction sheave, brake sheave and the outer rotor are connected by means of rabbet positioning and screw fastening instead of the same barrel. Therefore it needs improved designs to work out elevator tractors, simpler, more compact and practical in structure.

Further, FR 2 505 574 A discloses a frequency converter-controlled squirrel cage motor in particular for elevator operation, in which a stator is mounted on a non-rotating axle and a rotor rotating around the stator is rotatably carried on the same axle. The axle is fixed to stands, which conduct the support loads to the motor mounting base. A cylinder is rotatably carried on the stationary axle by means of end plates and bearings.

EP 1 074 505 A2 shows an actuating device for an elevator including a motor assembly. The motor assembly has, in a housing of the motor assembly, a coil, a stator disposed adjacent to the coil, a rotor, a rotary disc fixed to the rotor and having its center part splinedly connected to an input shaft to rotate therewith, and an encoder for detecting number of the rotation of the input shaft.

Moreover, EP 1 043 261 A2 discloses an elevator traction machine comprising a main shaft originated from a circularly-recessed base member whose one side is open. A circularly-recessed rotating member is provided within the base member in a fitting manner and is rotatively supported on the main shaft. A sheave is formed on the exterior circumferential surface of the circularly-recessed rotating member. A stator winding is provided on the interior circumferential surface of the base member. An encoder is disposed in the vicinity of the end of the main shaft.

### Summary of the Invention

This invention to deal with the technical problem is to bring about another type of elevator tractor which is easy to manufacture and install, high in commonality and easy for serial design based on the current technological background.

The technical proposal adopted by the invention to solve the above technological problems is as follows: the elevator tractor includes a inner stator fixed in a bearing structure, an outer rotor which is cupped and rotates around the inner stator, a traction sheave connected and fixed on the outer rotor, a brake gear coordinating with the brake sheave and detecting means especially an encoder which can measure or detect the speed and the relative position of magnetic fields of the stator and rotor. The bearing structure consists of bearing boards and is connected by means of a dismountable interconnecting structure, wherein the bearing structure is composed of two opposite bearing boards and connected by means of dismountable drag links.

Because the drag link can be the shape of rectangle, cylinder or other shapes, and it can be designed at any suitable place in the bearing board so as to make it easy to install and dismount, light and handy in structure. It is also convenient to manufacture and for serial designs.

One of the very helpful designs is that the four drag links dispersed over the corners of the bearing boards, which makes the whole bearing structure balanced, firm and reasonable under pressure.

The perfect improvement is to make the above brake sheave, the traction sheave and the outer rotor into one integrated part so as to achieve the effect of simplifying the structure and reducing manufacturing cost.

What is helpful is that the brake sheave, traction sheave and the outer rotor of the above-mentioned integrated structure are of the same barrel, there are traction grooves in the middle part of the barrel where steel ropes wind. The barrel is fixed onto the bearing shaft between the bearing boards by means of end cover and bearings. The magnetic body of the outer rotor is adhibited on the inner surface of the barrel which makes the brake sheave, traction sheave and the outer rotor into a whole to make the structure compact, smaller, lighter, easier for installation and of lower cost.

Another useful improvement is that the above brake gear is a boot-shaped structure without braking arm which renders it simpler and more compact. It is integrated with the drive magnet and fixed on the drag link without additional fixing devices, thus the structure is simple and easy to expand sizes. It is convenient to add the number of brake gears when the load increased.

Lastly, the encoder is fixed on the bearing board, and the encoder gear wheel of the cone axis tooths with the rotor gear wheels of the same number of teeth on the rotor end cover. It can feed back to the frequency converter conveniently the rotor speed and signal of the magnetic position of the stator and rotor without the use of expensive large aperture encoders.

Comparing with the current technology, the advantage of this invention lies in the adoption of dismountable bearing structure, especially the dismountable structure consists of the bearing boards and drag links which enables the separate production of the bearing boards and thus reduces the difficulty of manufacture. In serial designs, the bearing board can be used as the interchangeable part for various specifications which increases the generality. The product is reasonable in design, simple, compact, light and cheap. It can be installed on the top of the lift well as well as the top of the car. It is very suitable for home use.

### Brief Description of the Drawings

Figure 1: Sectional View of the Elevator Tractor.
Figure 2 : Three-dimensional Diagram of the Elevator Tractor.
Figure 3 : Three-dimensional Diagram of the Elevator Tractor (with some parts omitted).
Figure 4 : Sectional View of the Brake Gear of the Elevator Tractor.
Figure 5 : Another Sectional View of the Elevator Tractor.

### Detailed Description of the Drawings

Next we will elaborate on the invention with reference to the illustrations.

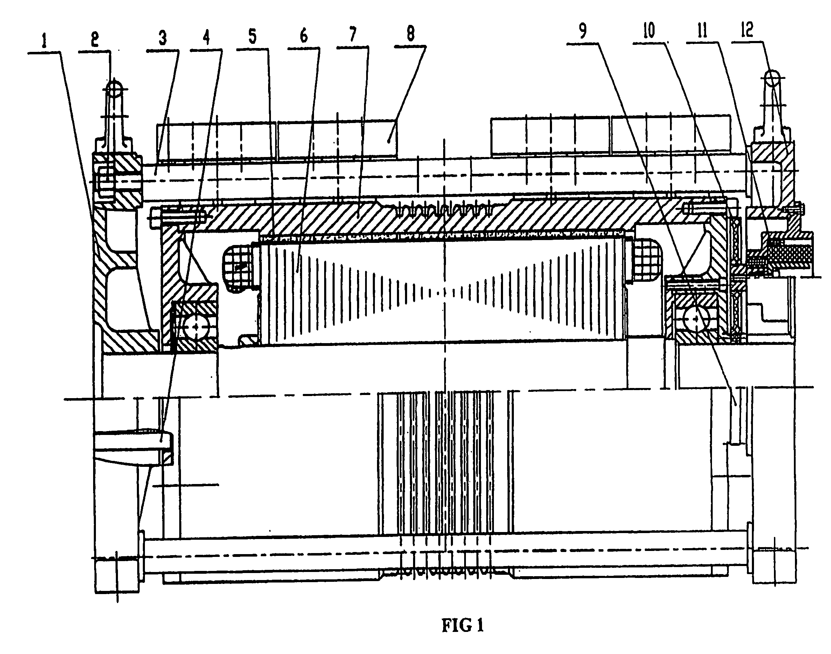

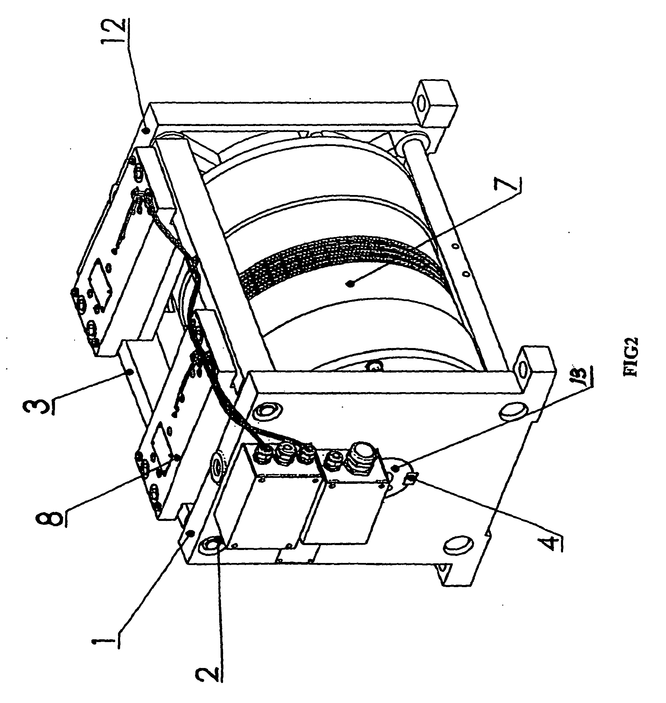

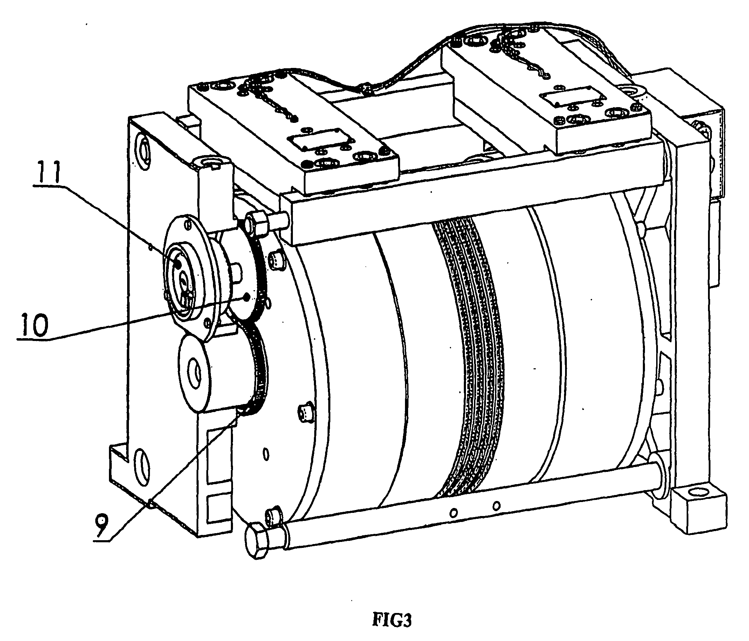

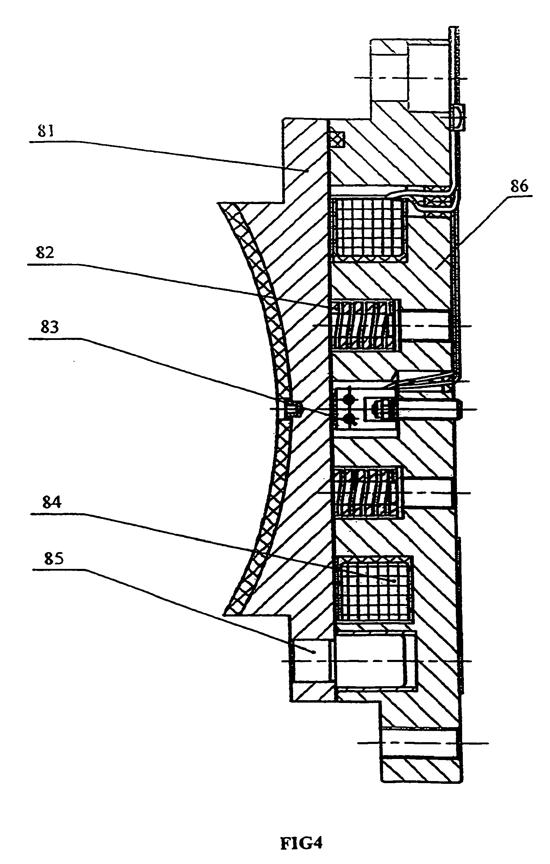

Just as shown in figure 1-2, the two opposite bearing boards of the elevator tractor are front bearing 1 and back bearing 12 with shaft holes in them. There are dismountable drag links 3 fixed with nuts 2 at the four corners of the bearing board to form a bearing structure of nearly a cube in shape. Bearing shaft 13 is to be fixed in the shaft holes between two bearing boards while inner stator 6 of the outer rotor is fixed upon shaft 13. Upon the iron core of inner stator 6 is fixed the armature winding and barrel 7 is cupping over inner stator 6. The barrel 7 acts as the brake sheave 7b, traction sheave 7a and the outer rotor and magnetic yoke, there are traction grooves in the middle part of the barrel as magnetic yoke where steel ropes wind. Both ends of the barrel are fastened through bolts with end covers connected to bearing shaft 13 by means of bearings. The magnetic body of outer rotor 5 is adhibited on the inner surface of the barrel to form the outer rotor structure. To facilitate the installation of the brake gear, at least two of above drag links 3 are that of rectangle cross section. Brake gear 8 fixed on two rectangle drag links, coordinates with the braking sheave 7b. The number of brake gear can be adjusted according to the load of the elevator. Brake gear is a comparatively mature technology. As is shown in figure 4, armature iron 81 is connected to foundation 86 by means of telescopic plug connection via guide column 85. The side of armature iron 81 facing the braking sheave is arcing area, and it is connected with a brake shoe. The side of foundation 86 facing armature iron 81 has a cavity built in which there locates coil 84 and sensitive switch group 83. The connection pin between the armature iron81 and the foundation 86 is cupped with a spring 82. Also the side of foundation 86 facing armature iron 81 has hole built in which there locates spring 82.As is shown in figure 2 and 3, encoder 11 is fixed on one bearing board, which is back bearing 12. Encoder gear wheel 10 on the cone axis tooths with rotor gear wheel 9 on the rotor end cover which has the same number of teeth. It can feed back to the frequency converter conveniently the rotor speed and signal of the magnetic position of the stator and rotor. In addition, the bearing board acting as front bearing 1 is connected with bearing shaft 13 with keys 4 for further fixation of the inner stator.

The operational principle of the tractor is as follows: firstly the drive frequency converter connects the stator with direct current to provide a moment of force which ensures that the stator will not rotate even there is no brake moment. Then connect the magnet of the brake gear with direct current. Driven by the electromagnetic force, the brake shoe on armature iron 81 will surmount pressure of spring 82 and rise up to ease the brake. Thereafter, connect the inner stator with three-phase alternating current to form a rotating magnetic field which will drive outer rotor 5 equipped with permanent magnet. In the middle of the outer rotor there are several traction grooves. When the steel rope with a passenger car on one end and the counterweight on the other end is put into the traction groove, the rope will ascend or descend with the rotation of the outer rotor because of the friction force between the steel rope and the traction groove, thus it can be used for carrying people up and down. When the elevator reaches the scheduled height, the outer rotor 5 stops rotating and the electromagnetic brake 8 is powered off. Driven by the spring 82 pressure, the brake shoe will act on the brake sheave of the outer rotor and keeps the car at the scheduled position by force of friction, thus the passengers can go in and out of the car safely. When the rotor rotates, gear wheel 9 on the end cover of the rotor will rotate as well, and drive the encoder to rotate at the same speed through a gear wheel of the same number of teeth to feed back to the frequency converter the information of speed and relative position of the magnetic fields of the stator and rotor. The permanent magnetic synchronous motor will ensure the stable and comfortable movement and provide enough, stable synchronous torque.

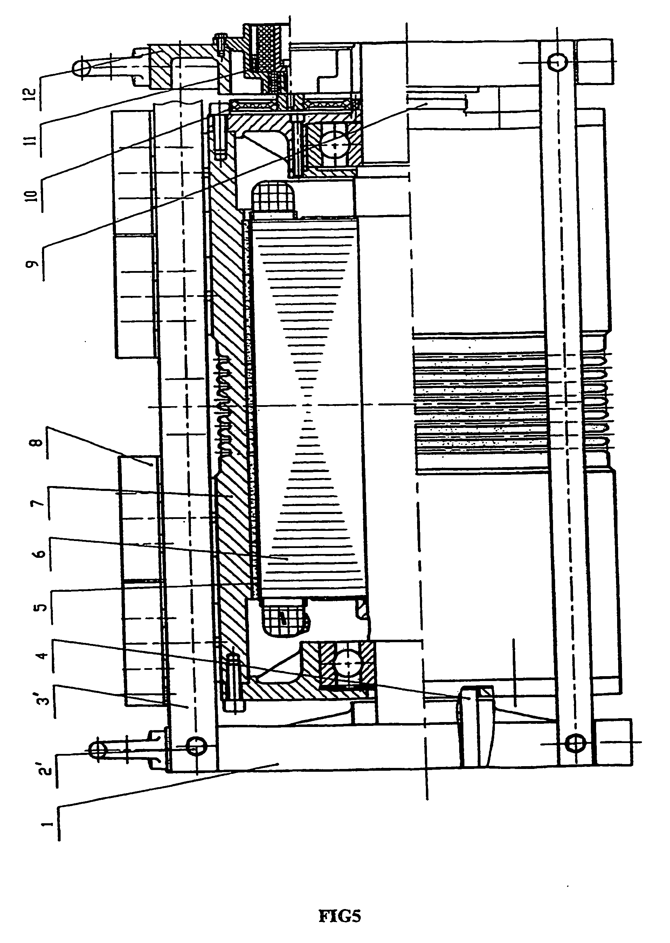

The above-mentioned structure adopts the dismountable bearing support of drag links. However, the dismountable bearing support can also use other connection pieces, such as strips of steel plate 3' which are not part of the present invention. The side end of the steel plate 3' is connected to bearing board 1 in a dismountable way through interconnecting pieces and bolts 2'. Just as shown in figure 5, it can also use four steel plates as the bearing boards connected in a dismountable way through interconnecting pieces and bolt. We will not elaborate on many similar structures.

We are just elaborating on one of the most successful cases of implementation and it could not be regarded as a limit to the claims of right. Any further technological improvement based on this invention or other replacements of similar or equivalent technology are subjected to all in the scope this invention that is applying for protection.

## Claims

1. Elevator tractor, including
an inner stator (6) fixed in a bearing structure,
an outer rotor (5) which is cupped over and rotating around the inner stator (6),
a traction sheave (7a) connected and fixed on the outer rotor (5), and
a brake gear (8) corresponding to a brake sheave (7b),
wherein the bearing structure is composed of bearing boards (1, 12) and connected by means of a dismountable interconnecting structure (3; 3')
**characterized in that** the elevator tractor further comprises
detecting means (11) especially an encoder which can measure or detect the speed and relative position of magnetic fields of the stator and rotor, and
wherein the described bearing structure is composed of two opposite bearing boards and connected by means of dismountable drag links (3).

2. Elevator tractor according to claim 1, **characterized in that** there are four drag links (3,), each located between two respective corners of the respective bearing boards.

3. Elevator tractor according to claims 1 or 2, **characterized in that** the described brake sheave (7b), traction sheave (7a) and the outer rotor (5) are integrated into an integrated whole.

4. Elevator tractor according to claim 3, **characterized in that** the integrated whole is a barrel (7) containing the brake sheave (7b), the traction sheave (7a) and the outer rotor (5), shows traction grooves in the middle part of the barrel where steel ropes wind and the barrel is installed on a bearing shaft between the bearing boards (1, 12) by means of end covers and bearings while a magnetic body of the outer rotor (5) is adhibited on a inner surface of the barrel (7).

5. Elevator tractor according to any of the preceding claims, **characterized in that** the brake gear (8) is a boot-shaped structure with a drive magnet and fixed on at least one of the drag links (3, 3').

6. Elevator tractor according to claim 5, **characterized in that** the respective drag links (3') show a rectangle cross section.

7. Elevator tractor according to claim 5, **characterized in that** the detecting means (11) is fixed on one of the bearing boards (1, 12), and a detecting means gear wheel (10) engages a rotor gear wheel on the rotor end cover having the same number of teeth as the detecting means gear wheel.

8. Elevator tractor according to claim 7, **characterized in that** the bearing boards (1, 12) are connected and fixed to the bearing shaft with one or more keys.

## Patentansprüche

1. Aufzugsschlepper, der umfasst:
einen Innenstator (6), der in einer Lagerstruktur fixiert ist,
einen Außenrotor (5), der über den Innenstator (6) gestülpt ist und um diesen rotiert,
eine Treibscheibe (7a), die mit dem Außenrotor (5) verbunden ist und an diesem fixiert ist, und
ein Bremsgestänge (8), das einer Bremsscheibe (7b) entspricht,
wobei die Lagerstruktur aus Lagerplatten (1, 12) besteht und mit Hilfe einer demontierbaren Verbindungsstruktur (3, 3') verbunden ist,
**dadurch gekennzeichnet, dass** der Aufzugsschlepper ferner umfasst:
Erfassungsmittel (11), insbesondere einen Messgeber, der die Geschwindigkeit und die Relativposition von Magnetfeldern des Stators und des Rotors messen oder erfassen kann, und
wobei die beschriebene Lagerstruktur aus zwei entgegengesetzten Lagerplatten besteht, die mittels demontierbarer Schleppstangen (3) verbunden sind.

2. Aufzugsschlepper nach Anspruch 1, **dadurch gekennzeichnet, dass** es vier Schleppstangen (3) gibt, von denen jede zwischen jeweiligen Ecken der jeweiligen Lagerplatten angeordnet ist.

3. Aufzugsschlepper nach Anspruch 1 oder 2, **dadurch gekennzeichnet, dass** die beschriebene Bremsscheibe (7a), die Treibscheibe (7a) und der Außenrotor (5) zu einem integrierten Ganzen integriert sind.

4. Aufzugsschlepper nach Anspruch 3, **dadurch gekennzeichnet, dass** das integrierte Ganze eine Walze bzw. Trommel (7) ist, welche die Bremsscheibe (7b), die Treibscheibe (7a) und den Außenrotor (5) enthält, Zugrillen in dem Mittelteil der Trommel, wo Stahlseile sich aufwickeln, aufweist, und wobei die Trommel mittels Endabdeckungen und Lagern auf einer Lagerwelle zwischen den Lagerplatten (1, 12) installiert ist, während ein magnetischer Körper des Außenrotors (5) auf einer Innenfläche der Trommel (7) befestigt ist.

5. Aufzugsschlepper nach einem der vorhergehenden Ansprüche, **dadurch gekennzeichnet, dass** das Bremsgestänge (8) eine stiefelförmige Struktur mit einem Antriebsmagneten ist und auf wenigstens einer der Schleppstangen (3, 3') fixiert ist.

6. Aufzugsschlepper nach Anspruch 5, **dadurch gekennzeichnet, dass** die jeweiligen Schleppstangen (3') einen rechteckigen Querschnitt zeigen.

7. Aufzugsschlepper nach Anspruch 5, **dadurch gekennzeichnet, dass** das Erfassungsmittel (11) auf einer der Lagerplatten (1, 12) fixiert ist, und ein Erfassungsmittel-Zahnrad (10) in ein Rotorzahnrad auf der Rotorendabdeckung mit der gleichen Anzahl von Zähnen wie das Erfassungsmittel-Zahnrad eingreift.

8. Aufzugsschlepper nach Anspruch 7, **dadurch gekennzeichnet, dass** die Lagerplatten (1, 12) mit einem oder mehr Keilen mit der Lagerwelle verbunden und daran fixiert sind.

## Revendications

1. Entraînement d'ascenseur, incluant
un stator interne (6) fixé dans une structure de support,
un rotor externe (5) qui est embouti et rotatif autour du stator interne (6),
une poulie de traction (7a) connectée et fixée sur le rotor externe (5), et
un engrenage de frein (8) correspondant à une poulie de frein (7b),
dans lequel la structure de support est composée de planches de support (1, 12) et connectée au moyen d'une structure d'interconnexion démontable (3 ; 3'), **caractérisé en ce que** l'entraînement d'ascenseur comprend en outre un moyen de détection (11), notamment un encodeur qui peut mesurer ou détecter la vitesse et position relative de champs magnétiques du stator et du rotor, et
dans lequel la structure de support décrite est composée de deux planches de support opposées et connectée au moyen de barres conductrices démontables (3).

2. Entraînement d'ascenseur selon la revendication 1, **caractérisé en ce qu'**il y a quatre barres conductrices (3) situées chacune entre deux coins respectifs des planches de support respectives.

3. Entraînement d'ascenseur selon la revendication 1 ou 2, **caractérisé en ce que** la poulie de frein (7b), la poulie de traction (7a) et le rotor externe (5) décrits sont intégrés dans un ensemble intégré.

4. Entraînement d'ascenseur selon la revendication 3, **caractérisé en ce que** l'ensemble intégré est un tambour (7) contenant la poulie de frein (7b), la poulie de traction (7a) et le rotor externe (5), présente des rainures de traction dans la partie centrale du tambour où des câbles d'acier s'enroulent et le tambour est installé sur un arbre à roulement entre les planches de support (1, 12) au moyen de recouvrements d'extrémité et de roulements tandis qu'un corps magnétique du rotor externe (5) est fixé sur une surface interne du tambour (7).

5. Entraînement d'ascenseur selon l'une quelconque des revendications précédentes, **caractérisé en ce que** l'engrenage de frein (8) est une structure en forme de botte avec un aimant d'entraînement et fixée sur au moins une des barres conductrices (3, 3').

6. Entraînement d'ascenseur selon la revendication 5, **caractérisé en ce que** les barres conductrices respectives (3') présentent une section transversale rectangulaire.

7. Entraînement d'ascenseur selon la revendication 5, **caractérisé en ce que** le moyen de détection (11) est fixé sur une des planches de support (1, 12) et une roue d'engrenage de moyen de détection (10) s'engage avec une roue d'engrenage de rotor sur le recouvrement d'extrémité de rotor ayant le même nombre de dents que la roue d'engrenage de moyen de détection.

8. Entraînement d'ascenseur selon la revendication 7, **caractérisé en ce que** les planches de support (1, 12) sont connectées et fixées à l'arbre à roulement avec une ou plusieurs clés.
